# EUROPÄISCHE PATENTSCHRIFT

(11) **EP 0 875 536 B1**
(45) Veröffentlichungstag und Bekanntmachung des Hinweises auf die Patenterteilung: **24.03.2004**
(21) Anmeldenummer: 98107410.7
(22) Anmeldetag: 23.04.1998
(51) Int. Cl.: C08L 83/04

(54) **Additionsvernetzende Siliconkautschukmischungen, ein Verfahren zu deren Herstellung, Verfahren zur Herstellung von Verbund-Formteilen und deren Verwendung**
Addition reaction-curing silicone elastomer compositions,process for their production, process for the production of composite mouldings and their use
Compositions d'élastomères de silicone réticulables par réaction addition, leur procédé de préparation, procédé de préparation de piéces moulées en matériau composite et leur utilisation

(30) Priorität: 02.05.1997 DE 19718521
(43) Veröffentlichungstag der Anmeldung: 04.11.1998
(73) Patentinhaber: GE Bayer Silicones GmbH & Co. KG, 40699 Erkrath (DE)
(72) Erfinder: Pesch, Klaus-Dieter, 51371 Leverkusen (DE); Rist, Stefan, 51381 Leverkusen (DE); Steinberger, Helmut, Dr., 51375 Leverkusen (DE); Wrobel, Dieter, Dr., 51375 Leverkusen (DE)

(56) Entgegenhaltungen:
- EP-A- 0 459 464
- EP-A- 0 503 975
- EP-A- 0 768 342

## Beschreibung

Die vorliegende Erfindung betrifft additionsvernetzende Siliconkautschuke, ein Verfahren zu deren Herstellung, Verfahren zur Herstellung von Verbund-Formteilen und deren Verwendung.

Die erfindungsgemäßen additionsvernetzenden Siliconkautschukmischungen zeichnen sich durch eine gute Haftung auf Substraten und eine verbesserte Reaktivität aus.

Es ist bekannt, die Haftung von additionsvernetzenden Siliconelastomeren auf verschiedenen Substraten durch ein oder mehrere Additive zu verbessern, die der unvernetzten Siliconkautschukmischung zugesetzt werden. In US-A 4.087.585 wird z.B. durch den Zusatz von 2 Additiven, einem kurzkettigen Polysiloxan mit mindestens einer SiOH-Gruppe und einem Silan mit mindestens einer Epoxygruppe und einer Si-gebundenen Alkoxygruppe, eine gute Haftung auf Aluminium erreicht. In EP-A 326 712 wird eine verbesserte Haftung auf verschiedenen Kunststoffen mittels einer Mischung oder einem Reaktionsprodukt aus (a) einer siliciumfreien Verbindung mit mindestens einer alkoholischen OH-Gruppe und mindestens einer Alkylengruppe und (b) einem Organosilan mit mindestens einer Alkoxygruppe und mindestens einer Epoxygruppe erreicht, wobei jedoch relativ lange Reaktionszeiten (1 h) bei einer Temperatur von 120°C notwendig sind. Die langen Reaktionszeiten werden häufig durch die gleichzeitig inhibierend wirkenden Haftadditive verursacht. Gemäß EP-A 503 975 kann die Inhibierung durch solche Additive auch durch die Wahl eines optimierten SiH/SiVi-Verhältnisses nur eingeschränkt verbessert werden. Die Haftung auf Aluminium als Substrat wird z.B. erst nach einer relativ langen Vulkanisationszeit von 2 h (bei 100°C gemessen) verbessert. Eine mögliche Verkürzung der Reaktionszeiten durch Temperaturerhöhung kann insbesondere bei vielen Kunststoffsubstraten wegen der fehlenden Temperaturbeständigkeit nicht vorgenommen werden.

Aufgabe der vorliegenden Erfindung ist daher die Bereitstellung von additionsvernetzenden Siliconkautschukmischungen mit einer guten Haftung auf Substraten, die die bisherigen Nachteile, wie eine geringe Reaktivität oder eine Vielzahl von Zusatzkomponenten, nicht aufweisen.

Es wurde nun gefunden, daß additionsvernetzende Mischungen, die neben den üblichen Bestandteilen mindestens ein Hydrogensiloxan mit mindestens 20 SiH-Gruppen und ein Alkoxysilan oder Alkoxysiloxan mit mindestens einer Epoxygruppe und gegebenenfalls ein Peroxid aufweisen, diese Aufgabe lösen.

Gegenstand der Erfindung sind daher additionsvernetzende Siliconkautschukmischungen, bestehend im wesentlichen aus
(a) 100 Teilen mindestens eines alkenylgruppenhaltigen linearen oder verzweigten Organopolysiloxans mit mindestens 2 Alkenylgruppen mit einer Viskosität von 0,01 bis 30.000 Pas,
(b) mindestens einem Hydrogensiloxan mit mindestens 20 SiH-Funktionen pro Molekül in einer Menge, so daß das molare Verhältnis der SiH-Gruppen zu der Gesamtmenge an Si-gebundenen Alkenylgruppen mindestens 1,5 beträgt,
(c) mindestens einem Pt- oder Rh-Katalysator und gegebenenfalls einem Inhibitor,
(d) 0,1 bis 10 Teilen mindestens eines Alkoxysilans mit mindestens einer Epoxygruppe und/oder Alkoxysiloxans mit mindestens einer Epoxygruppe,
   und gegebenenfalls
(e) 0 bis 200, vorzugsweise 5 bis 200 Teilen mindestens eines, gegebenenfalls oberflächlich modifizierten Füllstoffs
   und gegebenenfalls
(f) weiteren Hilfsstoffen, wie z.B. Phenylsiliconöle für selbstschmierende Mischungen oder Farbpasten, wie z.B. 10 bis 70 Gew.-% Pigmente enthaltende Siliconöle sowie
g) gegebenenfalls einem Peroxid.

Der Begriff Organopolysiloxane (a) im Sinne der Erfindung umfaßt alle bisher in vernetzbaren Organopolysiloxanmassen eingesetzten Polysiloxane. Vorzugsweise handelt es sich bei (a) um ein Siloxan aus Einheiten der allgemeinen Formel (I)

(R¹)ₐ(R²)_{b}SiO_{(4-a-b)/2} (I),

in denen
- R¹: einen einwertigen aliphatischen Rest mit 1 bis 8 Kohlenstoffatomen, vorzugsweise Methyl, und
- R²: einen Alkenylrest mit 2 bis 8 Kohlenstoffatomen, vorzugsweise Vinyl, bedeutet,
- a =: 0, 1, 2 oder 3,
- b =: 0, 1 oder 2
und die Summe a+b = 0, 1, 2 oder 3 ist,
mit der Maßgabe, daß durchschnittlich mindestens 2 Reste R² pro Molekül vorliegen. Vorzugsweise ist (a) dimethylvinylsiloxyendgestoppt.

Die Angaben in Teilen beziehen sich dabei immer auf Gewichtsteile.

In einer bevorzugten Ausführungsform der Erfindung weisen die erfindungsgemäßen Organopolysiloxane (a) Viskositäten von 0,01 bis 200 Pas, ganz besonders bevorzugt 0,2 bis 200 Pas auf.

Die Viskositäten werden gemäß DIN 53 019 bei 20°C bestimmt.

Herstellungsbedingt können insbesondere bei den verzweigten Polymeren, die auch in Lösungsmitteln gelöste Festharze (Festharzanteil z.B. 10 bis 80 Gew.-%) sein können, noch bis maximal 10 Mol-% aller Si-Atome Alkoxy- oder OH-Gruppen aufweisen.

Hydrogensiloxane (b) im Sinne der Erfindung sind vorzugsweise lineare, cyclische oder verzweigte Organopolysiloxane aus Einheiten der allgemeinen Formel (II)

(R³)_{c}(H)_{d}SiO_{(4-c-d)/2} (II),

in denen
- R³ =: einwertiger aliphatischer Rest mit 1 bis 8 Kohlenstoffatomen, vorzugsweise Methyl
- c =: 0, 1, 2 oder 3,
- d =: 0, 1 oder 2,
wobei die Summe c+d = 0, 1, 2 oder 3 ist,
mit der Maßgabe, daß durchschnittlich mindestens 20 Si-gebundene Wasserstoffatome je Molekül vorliegen.

Die Hydrogensiloxane (b) besitzen vorzugsweise eine Viskosität von 0,01 bis 5 Pas.

Die Hydrogensiloxane (b) können zusätzlich auch Organopolysiloxane, deren Anzahl an SiH-Gruppen x 2 < x < 20 beträgt, enthalten.

Katalysatoren (c) für die Vernetzungsreaktion sind vorzugsweise Pt (O)-Komplexe mit Alkenylsiloxanen als Liganden in katalytischen Mengen von 1 bis 100 ppm Pt oder Di-µ,µ'-dichloro-di(1,5-cyclooctadien)dirhodium. Als Rh-Verbindungen sind ebenfalls die in J. Appl. Polym. Sci 30, 1837-1846 (1985) beschriebenen Verbindungen einsetzbar. Die Mengen an Rh-Katalysator betragen ebenfalls vorzugsweise 1 bis 100 ppm.

Inhibitoren im Sinne der Erfindung sind alle gängigen Verbindungen, die bisher für diesen Zweck eingesetzt wurden, wie z.B. Alkylole oder Vinylsiloxane. Beispiele für solche bevorzugten Inhibitoren sind z.B. 1,3-Divinyl-tetramethyldisiloxan, 1,3,5,7-Tetravinyl-1,3,5,7-tetramethylcyclotetrasiloxan, 2-Methylbutinol (2) oder 1-Ethinylcyclohexanol in Mengen von 50 bis 10.000 ppm.

Als Alkoxysilane oder Alkoxysiloxane, die mindestens eine Epoxygruppe aufweisen (d), sind solche bevorzugt, die in der Alkoxyfunktion maximal 5 C-Atome aufweisen.

Besonders bevorzugt sind Mono(epoxyorgano)trialkoxysilane, wie z.B. Glycidoxypropyltrimethoxysilan und Siloxane wie sie in der EP-A 691 364 beschrieben werden, in Mengen von 0,1 bis 10 Teilen, bezogen auf die Summe aller Komponenten.

Füllstoffe (e) im Sinne der Erfindung sind vorzugsweise verstärkende Füllstoffe, wie z.B. pyrogene oder gefällte Kieselsäure mit BET-Oberflächen zwischen 50 und 400 m²/g, die auch oberflächlich behandelt sein können, in Mengen von vorzugsweise 10 bis 50 Teilen, und/oder Extender-Füllstoffe, wie z.B. Quarzmehl, Diatomeenerden.

Die Oberflächenbehandlung der Füllstoffe kann auch in situ durch den Zusatz von Silazanen, wie Hexamethylsilazan und/oder Divinyltetramethyldisilazan sowie Vinylalkoxysilanen, wie z.B. Vinyltrimethoxysilan, und Wasser oder anderen gängigen Füllstoffbeladungsmitteln, wie z.B. Alkoxysilanen oder Siloxandiolen, erfolgen.

In einer weiteren bevorzugten Ausführungsform der Erfindung enthält die Mischung weitere Hilfsstoffe (f), wie z.B. Phenylsilicone, die selbstschmierende Vulkanisate liefern, wie z.B. Copolymere aus Dimethylsiloxy- und Diphenylsiloxy- oder Methylphenylsiloxygruppen sowie Polysiloxane mit Methylphenylsiloxygruppen mit einer Viskosität von vorzugsweise 0,1 - 10 Pas oder Farbpasten. Die Menge an Hilfsstoffen beträgt vorzugsweise 0 bis 10, vorzugsweise 0,05 bis 10 Gew.-Teile.

In einer bevorzugten Ausführungsform der Erfindung enthält die erfindungsgemäße Siliconkautschukmischung zusätzlich mindestens ein Peroxid (g) in Mengen von 0,1 bis 2 Teilen, bezogen auf die Gesamtmischung.

Als Peroxide (g) sind Aroylperoxide, wie z.B. 2,4-Dichlorbenzoylperoxid und 4-Methylbenzoylperoxid, bevorzugt. Die Menge an Peroxid beträgt vorzugsweise 0 bis 1 Gew.-%, vorzugsweise 0,1 bis 0,5 Gew.-%.

Gegenstand der Erfindung ist zudem ein Verfahren zur Herstellung der erfindungsgemäßen additionsvernetzenden Siliconkautschukmischungen, wonach mindestens ein Organopolysiloxan (a) mit mindestens einem Füllstoff (e), der gegebenenfalls hydrophobiert sein kann, vermischt wird und dieses anschließend mit weiterem Organopolysiloxan (a) und Hydrogensiloxan (b), dem Katalysator (c) dem Alkoxysilan oder Alkoxysiloxan (d) und gegebenenfalls dem Peroxid (g) und den Hilfsstoffen (f) vermischt wird.

Das Vermischen erfolgt dabei vorzugsweise mit für hochviskose Materialien geeigneten Mischern, wie z.B. Kneter, Dissolver oder Planetenmischer.

In einer bevorzugten Ausführungsform des erfindungsgemäßen Verfahrens ist der Füllstoff hydrophobiert, wobei die Hydrophobierung vorzugsweise in situ erfolgt.

Bei der in situ Hydrophobierung werden vorzugsweise Organopolysiloxan (a), Füllstoff (e) und das Hydrophobierungsmittel, vorzugsweise Hexamethyldisilazan und/oder Divinyltetramethyldisilazan, vorzugsweise bei Temperaturen von 90-100°C mindestens 20 Minuten in einem für hochviskose Materialien geeigneten Mischaggregat, wie z.B. einem Kneter, Dissolver oder Planetenmischer, gerührt und anschließend bei T = 150-160°C von überschüssigen Beladungsmitteln und Wasser zunächst bei Normaldruck und dann im Vakuum bei einem Druck von 100 bis 20 mbar befreit. Die weiteren Komponenten (a), (b), (c), (d) und gegebenenfalls (f) und (g) werden anschließend über 10 bis 30 Minuten eingemischt. Die Mischung wird anschließend auf das gewünschte Substrat aufgebracht und vernetzt.

Gegenstand der Erfindung ist zudem ein Verfahren zur Herstellung von Verbund-Formteilen, insbesondere aus Kunststoffen, Glas oder Metallen, aus mindestens einer erfindungsgemäßen additionsvernetzenden Siliconkautschukmischung, wonach die additionsvernetzende Siliconkautschukmischung in 2 Teilmischungen aufgeteilt wird, von denen die 1. mindestens ein Organopolysiloxan (a), Katalysator (c) und gegebenenfalls Füllstoffe (e) und/oder Hilfsstoffe (f) und die 2. mindestens ein Organopolysiloxan (a), mindestens ein Hydrogensiloxan (b), mindestens ein Alkoxysilanoder Alkoxysiloxan mit mindestens einer Epoxygruppe (d) und gegebenenfalls Füllstoffe (e), Hilfsstoffe (f) und/oder Inhibitor (c) enthält, und diese erst im Spritzgießautomaten oder in einem vorgelagerten Mischkopf mit anschließendem Statikmischer zusammengeführt werden.

Ebenfalls Gegenstand der Erfindung ist ein weiteres Verfahren zur Herstellung von Verbund-Formteilen aus mindestens einer erfindungsgemäßen additionsvernetzenden Siliconkautschukmischung, wonach die additionsvemetzende Siliconkautschukmischung in 3 Teilmischungen aufgeteilt wird, von denen die 1. mindestens ein Organopolysiloxan (a), Katalysator (c) und gegebenenfalls Füllstoffe (e) und/oder Hilfsstoffe (f) und die 2. mindestens ein Organopolysiloxan (a), mindestens ein Hydrogensiloxan (b), sofern nicht in 3. enthalten, und gegebenenfalls Füllstoffe (e), Hilfsstoffe (f) und/oder Inhibitor (c) und die 3. mindestens ein Alkoxysilan- oder Alkoxysiloxan mit mindestens einer Epoxygruppe (d) und gegebenenfalls Hydrogensiloxan (b), sofern nicht in 2. enthalten, sowie mindestens ein Organopolysiloxan (a) und Füllstoffe (e) enthält, und diese erst im Spritzgießautomaten odere in einem vorgelagerten Mischkopf mit anschließendem Statikmischer zusammengeführt werden.

Für die erfindungsgemäßen Verfahren sind alle gängigen Spritzgußautomaten einsetzbar.

Die Mengenverhältnisse der eingesetzten Komponenten entsprechen vorzugsweise denen, die für die erfindungsgemäß Siliconkautschukmischungen beschrieben wurden.

Gegenstand der Erfindung ist zudem die Verwendung der erfindungsgemäßen additionsvernetzenden Siliconkautschukmischung zur Herstellung von Verbund-Formteilen.

Die nachfolgenden Beispiele, in denen alle Teile Gewichtsteile bedeuten, erläutern die Erfindung ohne dabei jedoch beschränkend zu wirken.

Die Haftung der ausgehärteten Siliconkautschukmischungen auf verschiedenen Substraten wird in Anlehnung an DIN 53 289 (Rollenschälversuch) mit jeweils 2 Probekörpern bei einer Zuggeschwindigkeit von 100 mm/min geprüft.

Die nachfolgenden Beispiele dienen der Erläuterung der Erfindung, ohne dabei auf diese beschränkt zu sein.

### Ausführungsbeispiele

### Beispiel 1

In einem Kneter wurden 54 Teile dimethylvinylsiloxyendgestopptes Polydimethylsiloxan (a.1) mit einer Viskosität von 65 Pas und 28 Teile dimethylvinylsiloxyendgestopptes Polydimethylsiloxan (a.2) mit einer Viskosität von 10 Pas mit 9 Teilen Hexamethyldisilazan, 0,2 Teilen Divinyltetramethyldivinyldisilazan und 3 Teile Wasser gemischt, anschließend mit 35 Teilen pyrogener Kieselsäure (e) mit einer BET-Oberfläche von 300 m²/g vermischt, auf ca. 100°C erwärmt, ca. 1 h gerührt und danach bei 150 bis 160°C von Wasser und überschüssigen Beladungsrnittelresten befreit (zum Schluß im Vakuum bei p = 20 mbar) und anschließend mit 18 Teilen (a.2) und 2 Teilen eines dimethylvinylsiloxyendgestoppten Polydimethylsiloxan (a.3) mit methylvinylsiloxygruppen mit einem Vinylgehalt von 2 mmol/g und einer Viskosität von 0,2 Pas verdünnt. Nach dem Erkalten wurde die Mischung mit 0,001 Teilen einer Pt-Komplexverbindung mit Alkenylsiloxan als Liganden in c) Tetramethyltetravinylcyclotetrasiloxan (Pt-Gehalt: 15 Gew.-%) und 0,85 Teilen Ethinylcyclohexanol als Inhibitor vermischt und mit den in Tabelle 1 angeführten weiteren Komponenten in den dort aufgeführten Mengen versetzt und mit einem eingelegten 3 mm dicken Kunststoffplättchen aus Polyamid (PA 6.6) in einer ca. 6 mm dicken Form 10 Minuten bei 175°C vulkanisiert.

**Tabelle 1**

| Versuchs Nr. | Mengen an | | | | | t₆₀*(110°C) | Haftung** [N/mm] | SiH***SiVi |
|---|---|---|---|---|---|---|---|---|
| | I | II | III | IV | V | | | |
| 1V | 2,9 | - | 3,2 | - | - | 2,3 min | <0,5 | 2,0 |
| 2V | 2,9 | - | 3,2 | 2,9 | - | | <0,5 | 6,9 |
| 3 | 2,9 | - | - | - | 4,0 | | 3-4 | 7,0 |
| 4 | 2,9 | 2,9 | 3,2 | - | - | | 1-2 | 4,6 |
| 5 | 2,9 | - | 3,2 | - | 2,9 | 1,5 min | 3-4 | 7,1 |

| | | | | | | | | |
|---|---|---|---|---|---|---|---|---|
| * Vulkametermessung mit Mansanto-Rheometer MDR 2000, Zeit bis zur 60 %igen Aushärtung; V = Vergleich. | | | | | | | | |
| ** Die Haftung wurde gemäß DIN 53 289 (Rollenschälversuch) an jeweils 2 Probekörpern bei einer Zuggeschwindigkeit von 100 mm/min geprüft. | | | | | | | | |
| *** SiH/SiVinyl ist das Verhältnis von SiH zu an Si gebundenem Vinyl. | | | | | | | | |

In der Tabelle wurden folgende Abkürzungen verwendet:
- I: verzweigtes epoxyfunktionelles Siloxan (d) nach EP-A 691 364 (Addukt aus Beispiel 4)
- II: lineares Polydimethylsiloxan mit einem mittleren Gehalt von 20 Methylhydrogensiloxygruppen und einem SiH-Gehalt von 7,6 mmol/g (b)
- III: lineares Polydimethylsiloxan mit einem mittleren Gehalt von 15 Methylhydrogensiloxygruppen und einem SiH-Gehalt von 5,4 mmol/g (b)
- IV: lineares Polydimethylsiloxana mit einem mittleren Gehalt von 15 Methylhydrogensiloxygruppen und einem SiH-Gehalt von 14,5 mmol/g (b)
- V: lineares Polydimethylsiloxan mit einem mittleren Gehalt von 30 Methylhydrogensiloxygruppen und einem SiH-Gehalt von 15 mmol/g (b).

### Beispiel 2

In einem Kneter wurden 47 Teile Polymer (a.1) und 24 Teile Polymer (a.2) mit 9 Teilen Hexamethyldisilazan, 0,4 Teilen Divinyltetramethyldivinylsilazan und 3 Teilen Wasser gemischt und anschließend mit 36 Teilen pyrogener Kieselsäure mit einer BET-Oberfläche von 300 m²/g vermischt und auf ca. 100°C erwärmt, ca. 1 h gerührt und danach bei 150 bis 160°C von Wasser und überschüssigen Beladungsmittelresten befreit (zum Schluß im Vakuum bei p = 20 mbar) und anschließend mit 25 Teilen Polymer (a.2) und 1,3 Teilen Polymer (a.3) verdünnt. Nach dem Erkalten wurde die Mischung mit 1,4 Teilen eines Phenylsiliconöls (f) mit einem Brechungsindex von 1,5 und einer Viskosität von 0,3 Pas, 0,001 Teilen der Komplexverbindung (c) aus Beispiel 1 in Tetramethyltetravinylcyclotetrasiloxan (Pt-Gehalt: 15 Gew.-%), 0,83 Teilen Ethinylcyclohexanol als Inhibitor (c) vermischt und mit in Tabelle 2 aufgeführten weiteren Komponenten in den dort angegebenen Mengen versetzt und mit einem eingelegten 3 mm dicken Kunststoffplättchen in einer ca. 6 mm dicken Form 20 Minuten bei 135°C vulkanisiert.

**Tabelle 2**

| Versuchs-Nr. | Menge an | | | |
|---|---|---|---|---|
| | VI | V | VII | Haftung |
| 6V | 2,1 | 2,2 | | <0,5 N |
| 7V | 2,1 | - | 0,6 | ≤0,5 N |
| 8 | 2,1 | 2,2 | 0,6 | 3-4 N |
| V = Vergleich | | | | |

In der Tabelle wurden folgende Abkürzungen verwendet:
- VI: lineares Polydimethylsiloxan mit einem mittleren Gehalt von 18 Methylhydrogensiloxygruppen und einem SiH-Gehalt von 7,0 mmol/g (b)
- VII: Glycidoxypropyltrimethoxysilan (d)

### Beispiel 3 (erfindungsgemäß)

In einem Kneter wurden 54 Teile Polymer (a.1) und 28 Teile Polymer (a.2) mit 9 Teilen Hexamethyldisilazan, 0,2 Teilen Divinyltetramethyldivinyldisilazan und 3 Teile Wasser gemischt und anschließend mit 35 Teilen pyrogener Kieselsäure (e) mit einer BET-Oberfläche von 300 m²/g vermischt, auf ca. 100°C erwärmt, ca. 1 h gerührt und danach bei 150 bis 160°C von Wasser und überschüssigen Beladungsmittelresten befreit (zum Schluß im Vakuum bei p = 20 mbar) und anschließend mit 18 Teilen Polymer (a.2) verdünnt. Nach dem Erkalten wurde die Mischung in 2 Komponenten aufgeteilt. Die eine Komponente wurde mit 2 Teilen Polymer (a.3) und 0,001 Teile der Pt-Verbindung aus Beispiel 1 (c) vermischt und in einem 20 1 Hobbock abgefüllt. Die 2. Komponente wurde mit 3,2 Teilen (III) (b) und 0,83 Teilen Ethinylcyclohexanol als Inhibitor vermischt und ebenfalls in einem 20 1 Hobbock abgefüllt.

Die beiden Komponenten wurden in einer 2-Komponenten-Dosieranlage zusammen mit 1 Vol-% einer Paste (M), einer Mischung aus 60 Gew.-% der 2. Komponente + 30 Gew.-% (V) + 10 Gew.-% (VII), über einen Mischkopf mit anschließendem Statikmischer auf einem Spritzgießautomaten in ein Werkzeug mit einem eingelegten Thermoplastteil aus Polyamid (PA 6.6) sowie Polybutylenterephthalat (PBT) mit und ohne Glasfaser eingespritzt und bei einer Formtemperatur von 160°C in 95 s ausgehärtet.

Die ausgehärtete Siliconkautschukmischung haftete sehr gut auf den unbehandelten Kunststoffen (Kohäsionsbruch).

Ein Vergleichsversuch ohne Paste (M) ergab keine Haftung.

### Beispiel 4 (erfindungsgemäß)

Beispiel 4 belegt die gute Haftung auch bei relativ schneller Vulkanisation bei niedriger Temperatur.

Die Mischung aus Beispiel 1 (ohne Zusätze aus Tabelle 1) wurde mit 3,2 Teilen (III) und 1,4 Teilen (VII) und 1,4 Teilen (V) vermischt und auf einer Folie aus Polyamid 6.6 über 15 Minuten bei 110°C oder über 1 h bei 90°C vulkanisiert.

Dabei wurde jeweils eine Haftung ≥5 N erreicht.

### Beispiel 5 (erfindungsgemäß)

Eine Mischung aus den beiden Komponenten nach Beispiel 3 wurde mit den in der nachstehenden Tabelle aufgeführten Zusätzen versetzt und zum Verkleben eines Bauteils aus Aluminium mit einem Kunststoff (Phenolharz), bei dem sich der elastische Klebstoff in einer Fuge des Kunststoffteils befand, verwendet.

Die Vulkanisation der Mischung wurde in 10 Minuten bei 200°C durchgeführt. Dabei wurden folgende Haftungseigenschaften festgestellt:

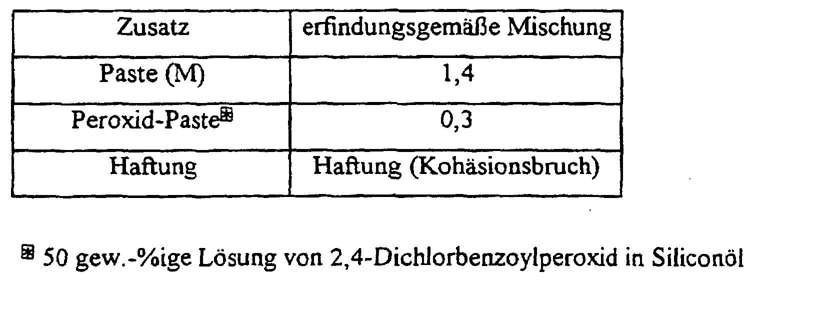

## Patentansprüche

1. Additionsvernetzende Siliconkautschukmischungen, bestehend im wesentlichen aus
(a) 100 Teilen mindestens eines alkenylgruppenhaltigen linearen oder verzweigten Organopolysiloxans mit mindestens 2 Alkenylgruppen mit einer Viskosität von 0,01 bis 30.000 Pas,
(b) mindestens einem Hydrogensiloxan mit mindestens 20 SiH-Funktionen pro Molekül in einer Menge, so daß das molare Verhältnis aller SiH-Gruppen zu der Gesamtmenge an Si-gebundenen Alkenylgruppen mindestens 1,5 beträgt,
(c) mindestens einem Pt- oder Rh-Katalysator und gegebenenfalls einem Inhibitor,
(d) 0,1 bis 10 Teilen mindestens eines Alkoxysilans mit mindestens einer Epoxygruppe und/oder Alkoxysiloxans mit mindestens einer Epoxygruppe,
und gegebenenfalls
(e) 0 bis 200 Teilen mindestens eines, gegebenenfalls oberflächlich modifizierten Füllstoffs
und gegebenenfalls
(f) weiteren Hilfsstoffen und/oder
(g) Peroxid.

2. Additionsvemetzende Siliconkautschukmischungen nach Anspruch 1, **dadurch gekennzeichnet, daß** das Organopolysiloxan (a) ein Siloxan aus Einheiten der allgemeinen Formel (I)
(R¹)ₐ(R²)_{b}SiO_{(4-a-b)/2} (I),
in denen
R¹ einen einwertigen aliphatischen Rest mit 1 bis 8 Kohlenstoffatomen und
R² einen Alkenylrest mit 2 bis 8 Kohlenstoffatomen bedeutet,
a = 0, 1, 2 oder 3,
b = 0, 1 oder 2
und die Summe a+b = 0, 1, 2 oder 3 ist,
mit der Maßgabe, daß durchschnittlich mindestens 2 Reste R² pro Molekül vorliegen.

3. Additionsvernetzende Siliconkautschukmischungen nach Anspruch 1 oder 2, **dadurch gekennzeichnet, daß** die Hydrogensiloxane (b) Siloxane aus Einheiten der allgemeinen Formel (II)
(R³)_{c}(H)_{d}SiO_{(4-c-d)/2} (II)
sind, in denen
R³ = einwertiger aliphatischer Rest mit 1 bis 8 Kohlenstoffatomen,
c = 0, 1, 2 oder 3,
d = 0, 1 oder 2,
wobei die Summe c+d = 0, 1, 2 oder 3 ist,
mit der Maßgabe, daß durchschnittlich mindestens 20 Si-gebundene Wasserstoffatome je Molekül vorliegen.

4. Additionsvernetzende Siliconkautschukmischungen nach einem oder mehreren der Ansprüche 1 bis 3, **dadurch gekennzeichnet, daß** das Alkoxysilan (d) Glycidooxypropyltrimethoxysilan ist.

5. Additionsvernetzende Siliconkautschukmischungen nach einem oder mehreren der Ansprüche 1 bis 4, **dadurch gekennzeichnet, daß** die Mischung als Peroxide 2,4-Dichlorbenzoylperoxid und 4-Methylperoxid enthält.

6. Verfahren zur Herstellung der additionsvemetzenden Siliconkautschukmischungen nach einem oder mehreren der Ansprüche 1 bis 5, **dadurch gekennzeichnet, daß** mindestens ein Organopolysiloxan (a) mit mindestens einem Füllstoff (e), der gegebenenfalls hydrophobiert sein kann, vermischt wird, und diese Mischung anschließend mit weiterem Organopolysiloxan (a) und Hydrogensiloxan (b) dem Katalysator (c), dem Alkoxysilan oder Alkoxysiloxan (d) und gegebenenfalls den Hilfsstoffen (f) und dem Peroxid (g) vermischt wird.

7. Verfahren zur Herstellung von Verbund-Formteilen aus mindestens einer additionsvemetzenden Siliconkautschukmischung nach einem oder mehreren der Ansprüche 1 bis 5, **dadurch gekennzeichnet, daß** die additionsvernetzende Siliconkautschukmischung in 2 Teilmischungen aufgeteilt wird, von denen die 1. mindestens ein Organopolysiloxan (a), Katalysator (c) und gegebenenfalls Füllstoffe (e) und/oder Hilfsstoffe (f) und die 2. mindestens ein Organopolysiloxan (a), mindestens ein Hydrogensiloxan (b), mindestens ein Alkoxysilan- oder Alkoxysiloxan mit mindestens einer Epoxygruppe (d) und gegebenenfalls Füllstoffe (e), Hilfsstoffe (f) und/oder Inhibitor (c) enthält, und diese erst im Spritzgießautomaten oder in einem vorgelagerten Mischkopf mit anschließendem Statikmischer zusammengeführt werden.

8. Verfahren zur Herstellung von Verbund-Formteilen aus mindestens einer additionsvemetzenden Siliconkautschukmischung nach einem oder mehreren der Ansprüche 1 bis 5, **dadurch gekennzeichnet, daß** die additionsvernetzende Siliconkautschukmischung in 3 Teilmischungen aufgeteilt wird, von denen die 1. mindestens ein Organopolysiloxan (a), Katalysator (c) und gegebenenfalls Füllstoffe (e) und/oder Hilfsstoffe (f), die 2. mindestens ein Organopolysiloxan (a), mindestens ein Hydrogensiloxan (b), sofern nicht in 3. enthalten und gegebenenfalls Füllstoffe (e), Hilfsstoffe (f) und/oder Inhibitor (c) und die 3. mindestens ein Alkoxysilan- oder Alkoxysiloxan mit mindestens einer Epoxygruppe (d) und gegebenenfalls Hydrogensiloxan (b), sofern nicht in 2. enthalten, sowie Organopolysiloxan (a) und Füllstoffe (e) enthält, und diese erst im Spritzgießautomaten oder in einem vorgelagerten Mischkopf mit anschließendem Statikmischer zusammengeführt werden.

9. Verwendung der additionsvernetzenden Siliconkautschukmischung nach einem oder mehreren der Ansprüche 1 bis 5 zur Herstellung von Verbund-Formteilen.

## Claims

1. Addition-crosslinking silicone rubber mixtures, composed substantially of
(a) 100 parts of at least one alkenyl-containing linear or branched organopolysiloxane having at least 2 alkenyl groups with a viscosity of from 0.01 to 30 000 Pas,
(b) at least one hydrosiloxane having at least 20 SiH functions per molecule in an amount such that the molar ratio of all of the SiH groups to the total amount of Si-bonded alkenyl groups is at least 1.5,
(c) at least one Pt catalyst or Rh catalyst and where appropriate an inhibitor,
(d) from 0.1 to 10 parts of at least one alkoxysilane having at least one epoxy group and/or of at least one alkoxysilane having at least one epoxy group,
and where appropriate
(e) from 0 to 200 parts of at least one, where appropriate surface-modified filler
and where appropriate
(f) other auxiliaries and/or
(g) peroxide.

2. Addition-crosslinking silicone rubber mixtures according to Claim 1, **characterized in that** the organopolysiloxane (a) is a siloxane composed of units of the general formula (I)
(R¹)ₐ(R²)_{b}SiO_{(4-a-b)/2} (I),
where, in these,
R¹ is a monovalent aliphatic radical having from 1 to 8 carbon atoms and
R² is an alkenyl radical having from 2 to 8 carbon atoms,
a = 0, 1, 2 or 3,
b = 0, 1 or 2
and the total a+b = 0, 1, 2 or 3,
with the proviso that an average of at least 2 R² radicals are present per molecule.

3. Addition-crosslinking silicone rubber mixtures according to Claim 1 or 2, **characterized in that** the hydrosiloxanes (b) are siloxanes composed of units of the general formula (II)
(R³)_{c}(H)_{d}SiO_{(4-c-d)/2} (II),
where, in these,
R³ = monovalent aliphatic radical having from 1 to 8 carbon atoms,
c = 0, 1, 2 or 3,
d = 0, 1 or 2
where the total c+d = 0, 1, 2 or 3,
with the proviso that an average of at least 20 Si-bonded hydrogen atoms are present in each molecule.

4. Addition-crosslinking silicone rubber mixtures according to one or more of Claims 1 to 3, **characterized in that** the alkoxysilane (d) is glycidooxypropyltrimethoxysilane.

5. Addition-crosslinking silicone rubber mixtures according to one or more of Claims 1 to 4, **characterized in that** the mixture comprises, as peroxides, 2,4-dichlorobenzoyl peroxide and 4-methylbenzoyl peroxide.

6. Process for preparing the addition-crosslinking silicone rubber mixtures according to one or more of Claims 1 to 5, **characterized in that** at least one organopolysiloxane (a) is mixed with at least one filler (e), which may where appropriate have been hydrophobicized, and this mixture is then mixed with further organopolysiloxane (a) and hydrosiloxane (b), the catalyst (c), the alkoxysilane or alkoxysiloxane (d) and where appropriate the auxiliaries (f) and the peroxide (g).

7. Process for producing composite mouldings composed of at least one addition-crosslinking silicone rubber mixture according to one or more of Claims 1 to 5, **characterized in that** the addition-crosslinking silicone rubber mixture is. divided into 2 submixes, of which the 1st comprises at least one organopolysiloxane (a), catalyst (c) and where appropriate fillers (e) and/or auxiliaries (f) and the 2nd comprises at least one organopolysiloxane (a), at least one hydrosiloxane (b), at least one alkoxysilane or alkoxysiloxane having at least one epoxy group (d) and where appropriate fillers (e), auxiliaries (f) and/or inhibitor (c), and these are combined only when they have entered the injection moulding machine or have entered an upstream mixing head followed by a static mixer.

8. Process for producing composite mouldings composed of at least one addition-crosslinking silicone rubber mixture according to one or more of Claims 1 to 5, **characterized in that** the addition-crosslinking silicone rubber mixture is divided into 3 submixes, of which the 1st comprises at least one organopolysiloxane (a), catalyst (c) and where appropriate fillers (e) and/or auxiliaries (f) the 2nd comprises at least one organopolysiloxane (a), at least one hydrosiloxane (b), in so far as not present in the 3rd, and where appropriate fillers (e), auxiliaries (f) and/or inhibitor (c) and the 3rd comprises at least one alkoxysilane or alkoxysiloxane having at least one epoxy group (d) and where appropriate hydrosiloxane (b), in so far as not present in the 2nd, and also organopolysiloxane (a) and fillers (e), and these are combined only when they have entered the injection moulding machine or have entered an upstream mixing head followed by a static mixer.

9. Use of the addition-crosslinking silicone rubber mixture according to one or more of Claims 1 to 5 for producing composite mouldings.

## Revendications

1. Mélanges de caoutchouc de silicone réticulables par addition, constitués principalement de
(a) 100 parties d'au moins un organopolysiloxane linéaire ou ramifié contenant des groupes alcényle avec au moins 2 groupes alcényle avec une viscosité de 0,01 à 30 000 Pas,
(b) au moins un hydrogénosiloxane avec au moins 20 fonctions SiH par molécule en une quantité telle que le rapport molaire de tous les groupes SiH à la quantité totale de groupes alcényle liés avec Si est au moins 1,5,
(c) au moins un catalyseur de Pt ou Rh et éventuellement un inhibiteur,
(d) 0,1 à 10 parties d'au moins un alcoxysilane avec au moins un groupe époxy et/ou un alcoxylsilane avec au moins un groupe époxy,
et éventuellement
(e) 0 à 200 parties d'au moins une charge éventuellement modifiée superficiellement
et éventuellement
(f) d'autres additifs et/ou
(g) un peroxyde.

2. Mélanges de caoutchouc de silicone réticulables par addition selon la revendication 1, **caractérisé en ce que** l'organopolysiloxane (a) est un siloxane d'unités de formule suivante (I)
(R¹)ₐ(R²)_{b}SiO_{(4-a-b)/2} (I),
dans laquelle
R¹ signifie un radical aliphatique monovalent avec 1 à 8 atomes de carbone et
R² signifie un radical alcényle avec 2 à 8 atomes de carbone,
a = 0, 1, 2 ou 3,
b = 0, 1 ou 2
et la somme a+b = 0, 1, 2 ou 3, sous réserve qu'il existe en moyenne au moins deux radicaux R² par molécule.

3. Mélanges de caoutchouc de silicone réticulable par addition selon la revendication 1 ou 2, **caractérisé en ce que** l'hydrogénosiloxane (B) est un siloxane d'unités de formule générale (II)
(R³)_{c}(H)_{d}SiO_{(4-c-d)/2} (II),
dans laquelle
R² = un radical aliphatique monovalent avec 1 à 8 atomes de carbone,
c = 0, 1, 2 ou 3,
d = 0,1 ou 2,
où la somme c+d = 0, 1, 2 ou 3,
sous réserve qu'il existe en moyenne au moins 20 atomes d'hydrogène liés au Si par molécule.

4. Mélanges de caoutchouc de silicone réticulable par addition selon l'une ou plusieurs des revendications 1 à 3, **caractérisé en ce que** l'alcoxysilane (d) est le glycidooxypropyltriméthoxysilane.

5. Mélanges de caoutchouc de silicone réticulable par addition selon l'une ou plusieurs des revendications 1 à 4, **caractérisé en ce que** le mélange contient comme peroxyde le 2,4-dichlobenzoylperoxyde et le 4-méthylperoxyde.

6. Procédé de préparation de mélanges de caoutchouc de silicone réticulable par addition selon l'une ou plusieurs des revendications 1 à 5, **caractérisé en ce qu'**au moins un organopolysiloxane (a) est mélangé avec au moins une charge (e), qui peut être éventuellement rendue hydrophobe, et ce mélange ensuite est mélangé avec les autres organopolysiloxane (a) et hydrogénosiloxane (b), le catalyseur (c), l'alcoxysilane ou l'alcoxysilane (d) et éventuellement les additifs (f) et le peroxyde (g).

7. Procédé de préparation de pièces moulées composites à partir d'au moins un mélange de caoutchouc de silicone réticulable par addition selon l'une ou plusieurs des revendications 1 à 5, **caractérisé en ce que** le mélange de caoutchouc de silicone réticulable par addition est réparti en deux mélanges partiels dont le premier contient au moins un organopolysiloxane (a), le catalyseur (c) et éventuellement les charges (e) et/ou les additifs (f) et le second contient au moins un organopolysiloxane (a), au moins un hdyrogénosiloxane (b), au moins un alcoxysilane ou alcoxysiloxane avec au moins un groupe époxy (d) et éventuellement des charges (e), des additifs (f) et/ou un inhibiteur (c), on les amène ensemble d'abord dans un automate de moulage par injection ou dans une tête de mélange placée en amont avec un mélangeur statique postérieur.

8. Procédé de préparation de pièces moulées composites à partir d'au moins un mélange de caoutchouc de silicone réticulable par addition selon l'une ou plusieurs des revendications 1 à 5, **caractérisé en ce que** le mélange de caoutchouc de silicone réticulable par addition est réparti en trois mélanges partiels, dont le premier contient au moins un organopolysiloxane (a), le catalyseur (c) et éventuellement les charges (e) et/ou les additifs (f) et le second contient au moins un organopolysiloxane (a), au moins un hydrogénosiloxane (b), dans la mesure ou il n'est pas contenu dans le troisième et éventuellement des charges (e), des additifs (f) et/ou l'inhibiteur (c) et le troisième contient au moins un alcoxysilane ou un alcoxysiloxane avec au moins un groupe époxy (d) et éventuellement un hydrogénosiloxane (b), dans la mesure où il n'est pas contenu dans le deuxième, ainsi que l'organopolysiloxane (a) et les charges (e), et on les amène d'abord dans les automates de moulage par injection ou dans une tête de mélange placée en amont avec un mélangeur statique postérieur.

9. Utilisation du mélange de caoutchouc de silicone réticulable par addition selon une ou plusieurs des revendications 1 à 5 pour la préparation de pièces moulées composites.
